# EUROPEAN PATENT SPECIFICATION

(11) **EP 3 201 535 B1**
(45) Date of publication and mention of the grant of the patent: **09.07.2025**
(21) Application number: 15791742.8
(22) Date of filing: 29.09.2015
(51) Int. Cl.: F24F 5/00, F24D 3/18

(54) **SYSTEM FOR WINTER HEATING AND SUMMER COOLING OF ENVIRONMENTS**
SYSTEM ZUM HEIZEN VON UMGEBUNGEN IM WINTER UND ZUM KÜHLEN VON UMGEBUNGEN IM SOMMER
SYSTÈME DE CHAUFFAGE EN HIVER ET DE CLIMATISATION EN ÉTÉ

(30) Priority: 03.10.2014 IT BO20140544
(43) Date of publication of application: 09.08.2017
(73) Proprietor: STILLE S.R.L., 20122 Milano (IT)
(72) Inventor: MANFROI, Giovanni, 32020 Cencenighe (IT); MAISTRELLO, Mario, 17100 Savona (IT)
(74) Representative: Modiano, Micaela Nadia
(86) International application number: PCT/IB2015/057437
(87) International publication number: WO 2016/051336

(56) References cited:
- EP-A1- 1 748 261
- EP-A1- 2 103 884
- EP-A1- 2 667 106
- EP-A1- 2 749 821
- EP-A2- 2 639 516
- DE-A1- 10 114 160
- DE-A1- 19 515 152
- DE-A1- 19 620 399
- FR-A1- 2 776 757
- GB-A- 2 334 089
- GB-A- 2 461 365
- US-A1- 2005 252 226

## Description

### TECHNICAL FIELD

The present invention relates to a system for winter heating and summer cooling of environments.

### BACKGROUND ART

As is known, currently, at least in Europe, the majority of buildings are equipped with a hot-water central heating system.

A traditional system comprises a boiler (normally of a methane or LPG type), a plurality of radiators installed in the various environments to be heated, and a plurality of ducts that connect hydraulically to one another both the boiler to the radiators and, possibly, the radiators to one another.

It has hence been considered, in an inventive way, to exploit a typical hot-water central heating system both for heating environments in the winter period and for cooling them in summer by adopting substantially the same components.

In other words, the present invention relates to a system for winter heating and summer cooling of an environment that is of the very low temperature type and is suitable for being used in those buildings already equipped with a radiator heating system of a traditional type.

The present system comprises an apparatus that can be inserted in existing heating systems and that moreover enables summer cooling, in a simple and non-invasive way, even in non-prearranged systems as are radiator-type systems.

In systems of this sort, in fact, the major problem is that in the summer period it is not possible to supply the radiators themselves with fluids at a low temperature in so far as this would cause formation of surface condensate not only on the terminals in the environment (radiators) but also on the entire main distribution network, which is normally scarcely, or not at all, insulated, and hence would cause accumulation of water within the masonry of the building, as well as causing premature oxidation of the joints and of the pipes. Since the apparatus in question is in any case supplied at a temperature higher than dew point in any climatic condition, it in no way allows formation of surface condensate on the piping and hence extends the applicability of summer air-conditioning also in existing radiator systems with the simple replacement of the radiator with a new-conception apparatus which constitutes one of the objects of the present invention. However, in order to guarantee proper operation of these systems, it is indispensable to intervene also on the central heating equipment in such a way that the latter will be able not only to supply a positive temperature delta between the delivery fluid and the return fluid in the winter period, but also a delta of opposite sign in the summer period so as to dispose of the heat extracted by the apparatuses housed in the individual environments.

The preamble portion of claim 1 is illustrated in GB-A-2 334 089 (TEMPERATURE LTD) and EP-A-2103884.

### DISCLOSURE OF INVENTION

Consequently, the aim of the present invention is to provide a heating/cooling system for environments that is reliable and simple and economically advantageous to produce.

According to the present invention, a heating/cooling system for environments is hence provided according to what is claimed in claim 1 or in any one of the claims that depend, directly or indirectly, upon claim 1.

### BRIEF DESCRIPTION OF THE DRAWINGS

For a better understanding of the present invention, a preferred embodiment is now described, purely by way of nonlimiting example and with reference to the attached drawings, wherein:
- Figure 1 is a schematic illustration of a heating/cooling system provided according to the teachings of the present invention;
- Figure 2 is a schematic illustration of a front view of a multipurpose thermal-treatment apparatus used in the system referred to in Figure 1;
- Figure 3 is a schematic illustration of a side view of the apparatus of Figure 2; and
- Figure 4 shows a three-dimensional view of the apparatus illustrated in Figures 2 and 3, from which some covering elements have been removed for greater clarity of the drawing.

### BEST MODE FOR CARRYING OUT THE INVENTION

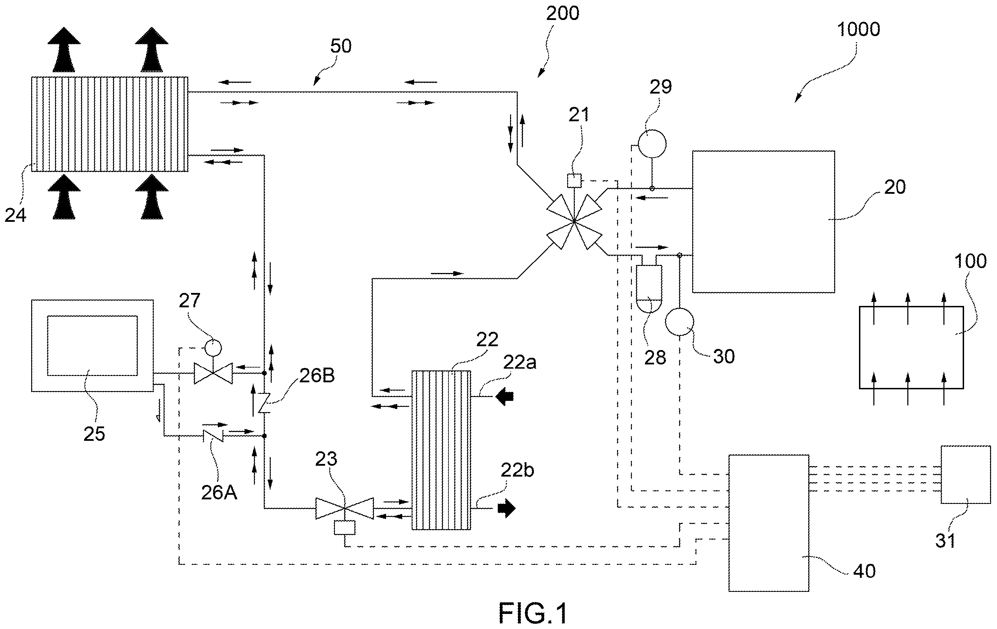

In Figure 1, designated as a whole by 1000 is a system for winter heating and summer cooling of environments provided according to the teachings of the present invention.

The system 1000 substantially comprises:
1) central heating and cooling equipment 100 (comprising a boiler device and a refrigerating device) (geothermal system with vertical probes, geothermal system with horizontal probes, energy piles, boiler plus refrigerating assembly, generation systems, direct energy-capture heating systems, heat pumps of the air type and the like) suitable for guaranteeing a certain difference of temperature between an incoming flow of water and an outgoing flow of water;
2) at least one multipurpose thermal-treatment apparatus 200 for winter heating and summer cooling of at least one environment; and
3) a hydraulic network (not illustrated) for connection between the central heating and cooling equipment 100 and the at least one multipurpose thermal-treatment apparatus 200.

The multipurpose thermal-treatment apparatus 200 in turn comprises the following devices co-ordinated with one another:
f1) a compressor 20 for a working fluid (such as, for example, R134, R407, or else R410);
f2) a motor-driven four-way valve 21 for reversal of the cycle (from winter to summer, and vice versa);
f3) a braze-welded heat exchanger 22 for heat exchange between the water coming from the central system and a working fluid, the heat exchanger 22 being provided with a supply pipe 22a and a discharge pipe 22b (Figure 1);
f4) a thermal-expansion valve 23 of an electronic type;
f5) a heat exchanger 24 of a convective type;
f6) a heat exchanger 25 of a radiant type;
f7) a first check valve 26A and a second check valve 26B;
f8) a closing valve 27 for the gas circuit;
f9) a gas/liquid separator vessel 28;
f10) a temperature probe 29 for detecting the temperature of the hot gas (at outlet from the compressor 20);
f11) a temperature probe 30 for detecting the temperature of the cold gas (at inlet to the compressor 20);
f12) an external probe 31 for detecting the temperature and relative humidity of the environment; and
f13) an electronic control unit 40 for controlling the above devices that require regulation.

In other words, the multipurpose thermal-treatment apparatus 200 may be considered as made up of the compressor 20 to which a fluid working circuit 50 is connected comprising the devices 21, 22, 23, 24, 24, 26, 27, 29 connected to one another via pipes (illustrated in Figure 1, but not numbered in order to simplify the present description).

The working circuit 50 is in turn controlled by the electronic control unit 40 by means of the two temperature probes 29, 30.

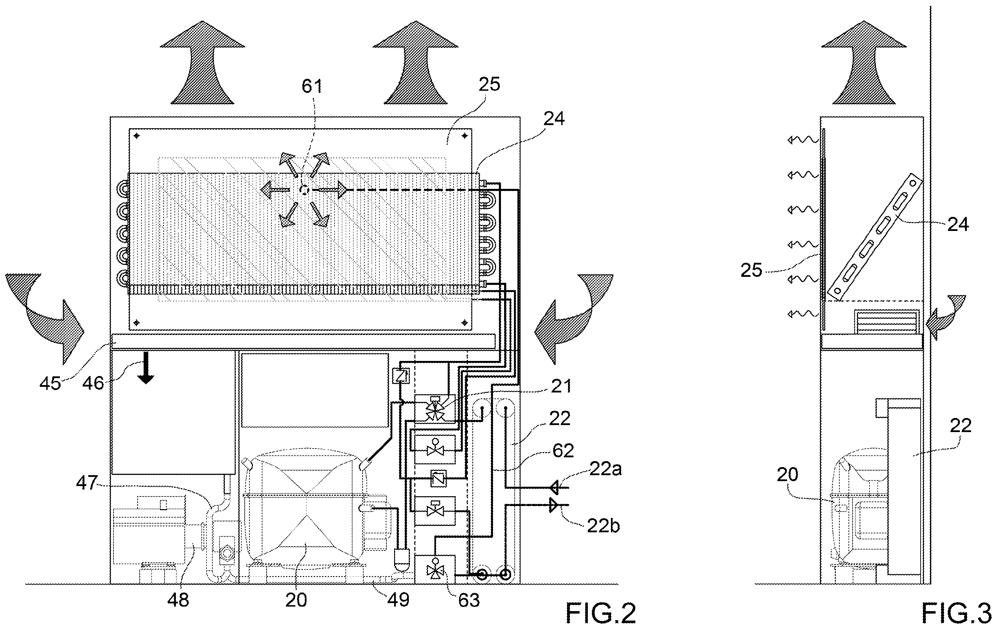

As illustrated in Figures 2 and 3, the apparatus 200 is equipped with a tank 45 for collection of the condensate that may form on the surface of the finned heat exchanger 24 and with a corresponding reservoir for accumulation of the condensate 46 itself.

By means of a pipe 47 the condensate flows towards an injection pump 48, which, via a duct 49 sends the condensate itself into the discharge pipe 22b.

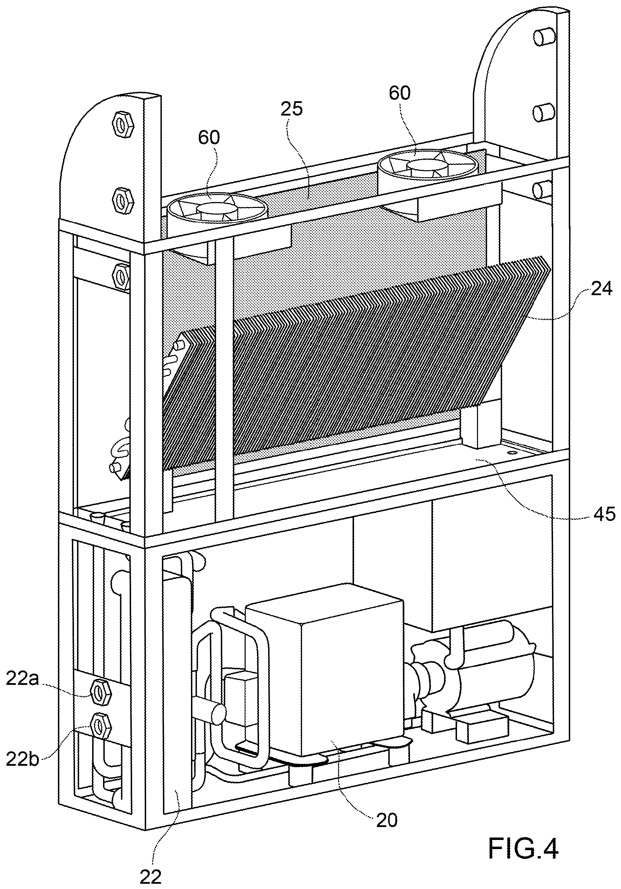

The apparatus 200 is moreover equipped with a forced-ventilation assembly 60 (Figure 4) for forced ventilation of the treated air, and with at least one nebulizing nozzle 61 (Figure 2) (advantageously set between the two heat exchangers 24, 25) for the water that flows through a duct 62 (Figure 2) and that departs from a three-way valve 63, this valve in turn co-ordinating inlet/outlet of water into/from the discharge pipe 22b.

Via the nebulizing nozzle 61, fine control of the hygrometric conditions of the environment is obtained, also thanks to the presence of the external probe 31 which is also connected to the electronic control unit 40.

The system 1000 may also be equipped with a regulation device (not illustrated) with integrated weekly chronothermostat and interface for connection and programming thereof via mobile phone and/or tablet.

Furthermore, the multipurpose thermal-treatment apparatus 200 has been conceived for having dimensions (thickness, height, etc.) compatible with the main hot-water radiators currently existing on the market. Its modularity in width enables full application according to the existing spaces occupied by normal radiators.

Appearing below are the steps of operation for a 1-kW multipurpose thermal-treatment apparatus 200 in the summer period and in the winter period.

### Winter period (the path of the working fluid is identified by one-headed arrows):

- the water coming from the existing distribution network (not illustrated) is sent to the plate heat exchanger 22 through the supply pipe 22a and is again conveyed towards the central heating and cooling equipment 100 via the discharge pipe 22b (Figure 1); the water yields its own heat to the working fluid (for example, R134, R407, or else R410) circulating in the working circuit 50; the water consequently reduces its own temperature by approximately 6°C, enabling evaporation of the working fluid circulating in the working circuit 50;
- the working fluid is kept at a pressure of 2 bar and with a boiling point that varies according to the type of the gas used (i.e., according to whether the working fluid is R407, or else R410, etc.);
- next, the working fluid is conveyed towards the compressor 20 (by way of the four-way valve 21 appropriately modulated by the electronic control unit 40) which raises the pressure thereof up to 38 bar, with a temperature of approximately 80°C; at this point, the hot fluid traverses the finned heat exchanger 24, enabling triggering of convective phenomena in the air and hence a subsequent vertical movement thereof and consequent cooling of the working fluid to a temperature close on that of condensation with a heat exchange with the external environment of approximately 100 W;
- immediately after, the working fluid leaving the heat exchanger 24 reaches the heat exchanger 25 where condensation of the working fluid itself occurs; passage of the working fluid in the two heat exchangers 24, 25 causes a reduction in temperature of the fluid to approximately 45°C;
- it is to be noted that, in the case where the temperature on the surface of the second heat exchanger 25 is higher than a pre-set threshold value, the forced-ventilation assembly 47 is active, blowing air onto said second heat exchanger 25; and
- at outlet from the second heat exchanger 25 a system of pipes conveys the working fluid to the expansion valve 23, where the pressure is reduced to the starting 2 bar, and the fluid can be conveyed again towards the plate heat exchanger 22 (evaporator).

It is to be noted that, advantageously, the presence of the second, radiant, heat exchanger 25 enables operation in the winter for prolonged periods without any intervention of the forced-ventilation assembly 47, thus guaranteeing a very quiet operation of the apparatus 200.

Purely by way of indication, appearing below is a possible thermal balance in the winter period:
- temperature of the water supply: 12°C;
- temperature of the water at outlet from the heat exchanger 22: 6 °C;
- flow rate of the water: 0.1 m³/h;
- electrical absorption of each apparatus: 220 W;
- thermal yield (sensible + latent): 1000 W;
- thermo-hygrometric conditions of the incoming air: 20°C - 50% RH;
- thermo-hygrometric conditions of the outgoing air: 31.5°C - 24% RH without humidification; 50% RH with humidification;
- air flow rate: 100-320 m³/h.

### Summer period (the path of the working fluid is identified by double-headed arrows):

- for summer operation, the main components remain substantially the same as those for winter operation; the only two devices that change state are the four-way valve 21, which reverses operation of the heat exchanger 24 and that of the heat exchanger 22, and the closing valve 27, which passes from the "open" state (winter) to the "closed" state (summer);
- the water coming from the existing system enters the water heat exchanger 22 and is here heated by approximately 8°C by the working fluid in condensation within the heat exchanger 22 itself;
- the working fluid, in the liquid phase, is sent to the thermal-expansion valve 23, after which it enters the convective heat exchanger 24, and hence, with the passage of air, absorbs heat from the latter, changing state and passing into the gaseous phase; it should be noted that the radiant heat exchanger 25 is by-passed thanks to activation of the closing valve 27 (Figure 1) by the electronic control unit 40;
- the flow of air on the heat exchanger 24 is guaranteed by the forced-ventilation assembly 60, in a way similar to what occurs in fan-coil systems;
- from here the flow of working fluid is conveyed to the compressor 20, which raises the pressure thereof up to 38 bar, and is then conveyed to the heat exchanger 24, and the cycle continues indefinitely; in this case, the forced-ventilation assembly 60 within the apparatus 200 guarantees an adequate flow of air on the heat exchanger 24, and the radiant heat exchanger 25 is excluded; and finally
- the water condensed on the surface of the heat exchanger 24 is collected in the tank 45 and evacuated, for example, by means of the system described previously.

Obviously, to get the system 1000 to function also in the summer period, the central heating and cooling equipment 100 necessarily has to be provided with a device for dissipation of the heat contained in the water leaving the heat exchanger 22, it being possible for this water to reach temperatures of 25°-30°C. Such a device for dissipation of the heat could be a refrigerator, or the like, which must be activated instead of the boiler (and which once again belongs to the central heating and cooling equipment 100).

For instance, a possible thermal balance in the summer period is the following:
- temperature of the water supply: 18°C;
- temperature of the water leaving the heat exchanger 22: 26 °C;
- water flow rate: 0.1 m³/h;
- electrical absorption of each apparatus: 200 W;
- refrigerating yield (sensible + latent): 800 W;
- thermo-hygrometric conditions of the incoming air: 26 °C; 50% RH - enthalpy 52.9 kJ/kg;
- thermo-hygrometric conditions outgoing air: 14°C; 100% RH - enthalpy 39.3 kJ/kg;
- air flow rate: 320 m³/h;
- dehumidification capacity in the conditions indicated above: 0.15 1/h.

The main advantages of the system for winter heating and summer cooling of environments described above may be summarized as follows:
- use of a typical hot-water central heating system both for heating the environments in the winter period and for cooling them in summer;
- elimination of danger of condensation both on the radiators present in the environments and in the pipes, which are scarcely, or not at all, insulated, a condensation that would cause accumulation of water within the masonry of the building, as well as causing premature oxidation of the joints and pipes; and
- radiant heat exchanger for heat exchange between working fluid and air directly connected to a working circuit that substantially uses a Carnot cycle of the working fluid.

## Claims

1. A system (1000) for winter heating and summer cooling of environments;
said system (1000) substantially comprising:
- a central heating and cooling equipment (100) which includes a boiler device, or a heat pump, and a refrigerating device; said central heating and cooling equipment (100) being suitable for guaranteeing a given difference of temperature between an incoming flow of water and an outgoing flow of water;
- at least one thermal-treatment apparatus (200) for thermal treatment of air in at least one environment; and
- a hydraulic network for connection between said central heating and cooling equipment (100) and said at least one thermal-treatment apparatus (200);
wherein said system is configured to be connected to a radiator heating system of a traditional type, the system being **characterized in that**
said thermal-treatment apparatus (200) is a multipurpose thermal-treatment apparatus (200) for winter heating and summer cooling of said at least one environment; said multipurpose thermal-treatment apparatus (200) comprising:
a compressor (20) for a working fluid;
a heat exchanger (22) for heat exchange between the water coming from the central system and the working fluid;
a temperature probe (29) for detecting the temperature of the working fluid at outlet from said compressor (20);
a temperature probe (30) for detecting the temperature of the working fluid at inlet to said compressor (20);
an external probe (31) for detecting the temperature and relative humidity of the environment; and
an electronic control unit (40) for controlling the foregoing devices that require regulation and **in that**
said system (1000) furhter comprises both a first heat exchanger (24) for heat exchange between working fluid and ambient air of a convective type and a second heat exchanger (25) for heat exchange between working fluid and ambient air of a radiant type, said working fluid being supplied at a temperature higher than dew point in any climatic condition.

2. The system (1000) according to claim 1, **characterized in that** it comprises at least one multipurpose thermal-treatment apparatus (200) for winter heating and summer cooling of at least one environment; said multipurpose thermal-treatment apparatus (200) being configured to replace a normal radiator, in terms of dimensions.

3. The system (1000) according to anyone of the preceding claims, **characterized in that** said multipurpose thermal-treatment apparatus (200) further comprises at least some of the following devices:
a motor-driven four-way valve (21) for reversal of the cycle (from winter to summer, and vice versa);
a thermal-expansion valve (23) of an electronic type;
a first check valve (26A) and a second check valve (26B);
a closing valve (27) designed to connect/disconnect said second heat exchanger (25);
a gas/liquid separator vessel (28);
an electronic control unit (40) for controlling the foregoing devices that require regulation, said motor-driven four-way valve (21), said heat exchanger (22), said thermal-expansion valve (23), said first heat exchanger (24), said first check valve (26A), said second check valve (26B), said closing valve (27) and said temperature probe (29) defining a fluid working circuit.

4. The system (1000) according to claim 3, **characterized in that** it further comprises a forced-ventilation assembly (60) for forced ventilation of the treated air.

5. The system (1000) according to claim 3 or claim 4, **characterized in that** it further comprises at least one nebulizing nozzle (61) set between said two heat exchangers (24, 25).

6. The system (1000) according to anyone of claims 3-5, **characterized in that** said second heat exchanger (25) of a radiant type is directly connected to said fluid working circuit (50) that substantially uses a Carnot cycle of the working fluid.

## Patentansprüche

1. Ein System (1000) zum Heizen von Umgebungen im Winter und zum Kühlen von Umgebungen im Sommer;
wobei das System (1000) im Wesentlichen Folgendes umfasst:
- eine zentrale Heiz- und Kühlvorrichtung (100), die ein Boiler-Gerät oder eine Wärmepumpe und ein Kühlgerät einschließt; wobei die zentrale Heiz- und Kühlvorrichtung (100) geeignet ist, einen bestimmten Temperaturunterschied zwischen einem eingehenden Wasserstrom und einem ausgehenden Wasserstrom zu gewährleisten;
- mindestens eine Wärmebehandlungsvorrichtung (200) zur Wärmebehandlung von Luft in mindestens einer Umgebung und
- ein hydraulisches Netzwerk zur Verbindung zwischen der zentralen Heiz- und Kühlvorrichtung (100) und der mindestens einen Wärmebehandlungsvorrichtung (200);
wobei das System konfiguriert ist, um mit einem Strahler-Heizsystem vom traditionellen Typ verbunden zu werden; wobei das System **dadurch gekennzeichnet ist, dass**
die Wärmebehandlungsvorrichtung (200) eine Mehrzweck-Wärmebehandlungsvorrichtung (200) zum Heizen der mindestens einen Umgebung im Winter und Kühlen derselben im Sommer ist; wobei die Mehrzweck-Wärmebehandlungsvorrichtung (200) Folgendes umfasst:
einen Kompressor (20) für ein Arbeitsfluid;
einen Wärmetauscher (22) zum Wärmeaustausch zwischen dem Wasser, das vom Zentralsystem kommt, und dem Arbeitsfluid;
eine Temperatursonde (29) zum Erfassen der Temperatur des Arbeitsfluids am Auslass des Kompressors (20);
eine Temperatursonde (30) zum Erfassen der Temperatur des Arbeitsfluids am Einlass des Kompressors (20);
eine externe Sonde (31) zum Erfassen der Temperatur und relativen Feuchtigkeit der Umgebung und
eine elektronische Steuereinheit (40) zum Steuern der oben genannten Vorrichtungen, die Regelung benötigen; und dadurch, dass
das System (1000) weiter sowohl einen ersten Wärmetauscher (24) zum Wärmeaustausch zwischen Arbeitsfluid und Umgebungsluft, vom konvektiven Typ, als auch einen zweiten Wärmetauscher (25) zum Wärmeaustausch zwischen Arbeitsfluid und Umgebungsluft, vom Strahlertyp, umfasst; wobei das Arbeitsfluid unter jeder klimatischen Bedingung bei einer Temperatur zugeführt wird, die höher ist als der Taupunkt.

2. Das System (1000) gemäß Anspruch 1, **dadurch gekennzeichnet, dass** es mindestens eine Mehrzweck-Wärmebehandlungsvorrichtung (200) zum Heizen mindestens einer Umgebung im Winter und Kühlen mindestens einer Umgebung im Sommer umfasst; wobei die Mehrzweck-Wärmebehandlungsvorrichtung (200) ausgebildet ist, um in Bezug auf die Abmessungen einen normalen Strahler zu ersetzen.

3. Das System (1000) gemäß einem beliebigen der obigen Ansprüche, **dadurch gekennzeichnet, dass** die Mehrzweck-Wärmebehandlungsvorrichtung (200) weiter mindestens einige der folgenden Vorrichtungen umfasst:
ein motorbetriebenes Vier-Wege-Ventil (21) zum Umkehren des Zyklus (von Winter auf Sommer und umgekehrt);
ein thermisches Expansionsventil (23) vom elektronischen Typ;
ein erstes Rückschlagventil (26A) und ein zweites Rückschlagventil (26B);
ein Schließventil (27), konstruiert, um den zweiten Wärmetauscher (25) anzuschließen/zu trennen;
ein Gas/Flüssigkeit-Separatorgefäß (28);
eine elektronische Steuereinheit (40) zum Steuern der oben genannten Vorrichtungen, die Regelung benötigen; wobei das motorbetriebene Vier-Wege-Ventil (21), der Wärmetauscher (22), das thermische Expansionsventil (23), der erste Wärmetauscher (24), das erste Rückschlagventil (26A), das zweite Rückschlagventil (26B), das Schließventil (27) und die Temperatursonde (29) einen Fluid-Arbeitskreislauf bestimmen.

4. Das System (1000) gemäß Anspruch 3, **dadurch gekennzeichnet, dass** es weiter ein Zwangslüftungssystem (60) zur Zwangslüftung der behandelten Luft umfasst.

5. Das System (1000) gemäß Anspruch 3 oder Anspruch 4, **dadurch gekennzeichnet, dass** es weiter mindestens eine Zerstäuberdüse (61) umfasst, die zwischen den zwei Wärmetauschern (24, 25) eingerichtet ist.

6. Das System (1000) gemäß einem beliebigen der Ansprüche 3-5, **dadurch gekennzeichnet, dass** der zweite Wärmetauscher (25) vom Strahlertyp direkt mit dem Fluid-Arbeitskreislauf (50) verbunden ist, der im Wesentlichen einen Carnotschen Kreisprozess des Arbeitsfluids nutzt.

## Revendications

1. Système (1000) pour le chauffage en hiver et le climatisation en été d'environnements ; ledit système (1000) comprenant essentiellement :
- un équipement central de chauffage et de climatisation (100) qui comprend un dispositif de chaudière ou une pompe à chaleur et un dispositif de réfrigération ; ledit équipement central de chauffage et de climatisation (100) étant adapté pour garantir une différence de température donnée entre un flux d'eau entrant et un flux d'eau sortant ;
- au moins un appareil de traitement thermique (200) pour le traitement thermique de l'air dans au moins un environnement ; et
- un réseau hydraulique pour la connexion entre ledit équipement central de chauffage et de climatisation (100) et ledit au moins un appareil de traitement thermique (200) ; dans lequel ledit système est configuré pour être raccordé à un système de chauffage par radiateurs de type traditionnel, le système étant **caractérisé en ce que** ledit appareil de traitement thermique (200) est un appareil de traitement thermique polyvalent (200) pour le chauffage en hiver et le climatisation en été dudit au moins un environnement; ledit appareil de traitement thermique polyvalent (200) comprenant :
un compresseur (20) pour un fluide de travail ;
un échangeur de chaleur (22) pour l'échange de chaleur entre l'eau provenant du système central et le fluide de travail ;
une sonde de température (29) pour détecter la température du fluide de travail à la sortie dudit compresseur (20) ;
une sonde de température (30) pour détecter la température du fluide de travail à l'entrée dudit compresseur (20) ;
une sonde externe (31) pour détecter la température et l'humidité relative de l'environnement ; et
une unité de commande électronique (40) pour commander les dispositifs précités qui nécessitent une régulation, et **en ce que**
ledit système (1000) comprend en outre à la fois un premier échangeur de chaleur (24) pour l'échange de chaleur entre le fluide de travail et l'air ambiant de type convectif et un deuxième échangeur de chaleur (25) pour l'échange de chaleur entre le fluide de travail et l'air ambiant de type radiant, ledit fluide de travail étant fourni à une température supérieure au point de rosée dans toutes les conditions climatiques.

2. Système (1000) selon la revendication 1, **caractérisé en ce qu'**il comprend au moins un appareil de traitement thermique polyvalent (200) pour le chauffage en hiver et le climatisation en été d'au moins un environnement ; ledit appareil de traitement thermique polyvalent (200) étant configuré pour remplacer un radiateur normal, en termes de dimensions.

3. Système (1000) selon l'une quelconque des revendications précédentes, **caractérisé en ce que** ledit appareil de traitement thermique polyvalent (200) comprend en outre au moins certains des dispositifs suivants :
une vanne à quatre voies motorisée (21) pour l'inversion du cycle (de l'hiver à l'été, et vice versa) ;
une vanne à détente thermique (23) de type électronique ;
un premier clapet anti-retour (26A) et un second clapet anti-retour (26B) ;
une vanne de fermeture (27) conçue pour connecter/déconnecter ledit second échangeur de chaleur (25) ;
un séparateur gaz/liquide (28) ;
une unité de commande électronique (40) pour commander les dispositifs précités qui nécessitent une régulation, ladite vanne à quatre voies motorisée (21), ledit échangeur de chaleur (22), ladite vanne à détente thermique (23), ledit premier échangeur de chaleur (24), ledit premier clapet anti-retour (26A), ledit second clapet anti-retour (26B), ladite vanne de fermeture (27) et ladite sonde de température (29) définissant un circuit de travail de fluide.

4. Le système (1000) selon la revendication 3, **caractérisé en ce qu'**il comprend en outre un ensemble de ventilation forcée (60) pour la ventilation forcée de l'air traité.

5. Le système (1000) selon la revendication 3 ou la revendication 4, **caractérisé en ce qu'**il comprend en outre au moins une buse de nébulisation (61) disposée entre lesdits deux échangeurs de chaleur (24, 25).

6. Système (1000) selon l'une quelconque des revendications 3 à 5, **caractérisé en ce que** ledit deuxième échangeur de chaleur (25) de type radiant est directement relié audit circuit de travail fluidisé (50) qui utilise essentiellement un cycle de Carnot du fluide de travail.
